# EUROPÄISCHE PATENTANMELDUNG

(11) **EP 1 519 080 A1**
(43) Veröffentlichungstag der Anmeldung: **30.03.2005**
(21) Anmeldenummer: 03021909.1
(22) Anmeldetag: 29.09.2003
(51) Int. Cl.: F16H 61/12

(54) **Ansteuereinrichtung zum Betätigen einer hydraulisch betätigbaren Kupplung eines Automatikgetriebes**

(71) Anmelder: BorgWarner, Inc., Auburn Hills, MI 48326-1782 (US)
(72) Erfinder: Ebinger, Günter, Dr., 76684 Östringen (DE); Burmeister, Matthias, 69121 Heidelberg (DE)
(74) Vertreter: Neunert, Peter Andreas

(57) **Zusammenfassung**

Die Erfindung geht von einer Ansteuereinrichtung zum Betätigen einer hydraulisch betätigbaren Kupplung (19) eines Automatikgetriebes neuerer Bauart für ein Kraftfahrzeug oder dergleichen aus, welche mit einem für einen Normalbetrieb vorgesehenen elektrisch ansteuerbaren Steuerventil (11) ausgestattet ist, welches im elektrisch angesteuerten Zustand eine Beaufschlagung der Kupplung (19) mit einer Hydraulikflüssigkeit zum Betätigen der Kupplung (19) ermöglicht. Erfindungsgemäß ist ein bei fehlender elektrischer Ansteuerbarkeit des Steuerventils (11) hydraulisch ansteuerbares Notlauf-Kupplungsventil (8) für einen Notbetrieb vorgesehen, welches eine Beaufschlagung der Kupplung (19) mit der Hydraulikflüssigkeit zum Betätigen der Kupplung (19) ermöglicht.

## Beschreibung

Die Erfindung betrifft eine Ansteuereinrichtung zum Betätigen einer hydraulisch betätigbaren Kupplung eines Automatikgetriebes beispielsweise eines Kraftfahrzeugs, gemäß dem Oberbegriff des Anspruchs 1.

Die überwiegende Anzahl von Automatikgetrieben herkömmlicher Bauart weist als Anfahrelement einen sogenannten hydrodynamischen Wandler auf, um ein Kraftfahrzeug aus dem Stand in Bewegung setzen zu können. Da mittlerweile die Ansprüche der Fahrzeugführer an den Kraftstoffverbrauch und an die Fahrbarkeit erheblich gestiegen sind, wurde es erforderlich, in jedem Bewegungszustand des Kraftfahrzeugs Steuer- und/oder Regeleingriffe zuzulassen. Bei Automatikgetrieben der vorstehend beschriebenen Art war dies nur bedingt möglich. Daher wurden andere Steuerungs- und/oder Regelkonzepte für Automatikgetriebe entwickelt.

Heutige Automatikgetriebe verfügen in der Regel über einen hydrodynamischen Drehmomentwandler als Anfahrelement. Daneben hinaus gibt es einige Anwendungen bei denen der Drehmomentwandler durch eine Kupplung als Anfahrelement ersetzt wird. Diese Kupplung wird hydraulisch angesteuert/geregelt und gleichzeitig hydraulisch gekühlt. Gangwechsel werden bei den gestuften Getrieben durch mehrere hydraulisch schaltbare Kupplungen oder Bremsen realisiert.

Bei dem Doppelkupplungsgetriebe neuerer Bauart werden die Funktionen Anfahren und Schalten durch zwei Kupplungen abgedeckt. Beispielhaft sei auf ein Doppelkupplungsgetriebe in der Offenlegungsschrift DE 1982116A1 hingewiesen.

In der hydraulischen Steuerungs- und/oder Regelungseinrichtung für ein derartiges (Doppel-)Kupplungsgetriebe sind in der Regel Elektromagnetventile vorgesehen, die ein Betätigen der Kupplungen z.B. für das Anfahren übernehmen. Im Fehlerfall, wenn die Stromversorgung zu den Ventilen unterbrochen ist, findet kein Durchtrieb mehr statt, da kein Druck an den Kupplungen aufgebaut werden kann. Das Kraftfahrzeug bleibt liegen.

Der Erfindung liegt nunmehr die Aufgabe zugrunde, eine Ansteuereinrichtung für ein Automatikgetriebe der vorstehend genannten Art derart auszugestalten und weiterzubilden, dass das Kraftfahrzeug bei einem elektrischen oder elektronischen Ausfall zumindest insoweit fahrbereit bleibt, dass kurze Distanzen, wie z.B. zu einer nahegelegenen Werkstatt, ohne fremde Hilfe zurückgelegt werden können.

Diese Aufgabe wird bei einer gattungsgemäßen Ansteuereinrichtung durch die Merkmale des kennzeichnenden Teils des Anspruchs 1 erfindungsgemäß gelöst.

Vorteilhafte Ausführungen und Weiterbildungen der Erfindung sind in den Unteransprüchen angegeben.

Die Erfindung geht von einer Ansteuereinrichtung an sich bekannter Art zum Betätigen einer hydraulisch betätigbaren Kupplung eines Automatikgetriebes aus, welche mit einem für einen Normalbetrieb vorgesehenen elektrisch ansteuerbaren Steuerventil zum Betätigen der Kupplung ausgestattet ist. Wird das Steuerventil gemäß dem Stand der Technik elektrisch angesteuert, so wird dieses geöffnet und dadurch - sofern auch alle weiteren in der Hydraulikflüssigkeitszuleitung zur hydraulischen Kupplungsbetätigungseinrichtung liegenden Ventile geöffnet sind - die Kupplung betätigt. Die Größe der Durchflussöffnung des Steuerventils für die Hydraulikflüssigkeit kann gemäß dem Stand der Technik in der Regel in Abhängigkeit von der elektrischen Ansteuerung variiert werden. Da der hydraulische Druck hinter der Durchflussöffnung von den Abmessungen der Durchflussöffnung abhängt, kann auf diese Weise auch der für die Betätigung der Kupplung notwendige hydraulische Druck in weitem Umfang variiert werden.

Erfindungsgemäß ist nunmehr ein hydraulisch ansteuerbares Notlauf-Kupplungsventil für einen Notbetrieb vorgesehen, welches bei fehlender elektrischer Ansteuerbarkeit des vorgenannten Steuerventils -beispielsweise weil die Stromversorgung zu diesem vorerwähnten, allein elektrisch ansteuerbaren Steuerventil unterbrochen ist- weiterhin ein Betätigen der Kupplung ermöglicht.

Es gibt nun eine Vielzahl an Möglichkeiten, das vorgenannte Notlauf-Kupplungsventil hydraulisch anzusteuern. Erfindungsgemäß ist vorgesehen, dass das Notlauf-Kupplungsventil mit einem hydraulischen Druck ansteuerbar ist, welcher von einer Drehzahl eines das Automatikgetriebe antreibenden Motors abhängig ist.

Handelt es sich bei dem in Rede stehenden Getriebe beispielsweise um ein von einem Verbrennungsmotor angetriebenes Automatikgetriebe eines Kraftfahrzeugs, so sieht eine besonders vorteilhafte Variante der Erfindung vor, dass das Notlauf-Kupplungsventil mit einem hydraulischen Druck ansteuerbar ist, welcher im wesentlichen proportional zur Drehzahl dieses Verbrennungsmotors ist. Ausgehend von einem bei der Leerlaufdrehzahl des Verbrennungsmotors geschlossenen Notlauf-Kupplungsventil und damit offener Kupplung kann auf diese Weise ein Fahrzeug durch einfaches Gasgeben in Bewegung gesetzt werden. Der Mechanismus ist im einzelnen wie folgt:

Mit zunehmender Drehzahl des Verbrennungsmotors nimmt der hydraulische Ansteuerdruck für das Notlauf-Kupplungsventil zu. Ein zunehmender hydraulischer Ansteuerdruck bedeutet eine Vergrößerung der Durchtrittsöffnung des Notlauf-Kupplungsventils für die Hydraulikflüssigkeit. Diese Vergrößerung der Durchtrittsöffnung hat wiederum eine Druckerhöhung an der Betätigungseinrichtung der Kupplung zur Folge, bis schließlich mit zunehmender Drehzahl die Kupplung ganz geschlossen wird.

Bestandteil eines Automatikgetriebes eines Kraftfahrzeugs üblicher Bauart ist eine von dem Verbrennungsmotor angetriebene Getriebepumpe. Diese Getriebepumpe stellt an deren Pumpenaustritt den hydraulischen Druck zum Betätigen der vorgenannten Kupplung des Automatikgetriebes bereit. Eine besonders vorteilhafte Variante der Erfindung sieht nunmehr vor, dass in der mit dem Pumpenaustritt der Getriebepumpe verbundenen Leitung eine Durchflussblende angeordnet ist. Fließt durch diese Durchflussblende die Hydraulikflüssigkeit, so ist der Druck der Hydraulikflüssigkeit am Ausgang der Durchflussblende geringer ist als der Druck der Hydraulikflüssigkeit am Eingang der Durchflussblende. Diese Druckdifferenz ist abhängig von der Durchflussgeschwindigkeit der Hydraulikflüssigkeit. Die Erfindung macht sich nun diese von der Drehzahl abhängige Durchflussgeschwindigkeitsabhängigkeit des an der Durchflussblende abfallenden Differenzdrucks zunutze, indem dieser Differenzdruck zur Ansteuerung des Notlauf-Kupplungsventils verwendet wird.

Ein Ausführungsbeispiel der Erfindung ist in der Zeichnung dargestellt. Es zeigen:
- Figur 1: ein Prinzipschaltbild einer erfindungsgemäßen An-steuereinrichtung für zwei hydraulisch betätigbare Kupplungen eines Doppelkupplungsgetriebes
- Normalbetriebszustand, beide Kupplungen des Doppelkupplungsgetriebes sind angesteuert -
- Figur 2: ein Prinzipschaltbild der erfindungsgemäßen Ansteuereinrichtung gemäß der Figur 1
- Normalbetriebszustand, nur die zweite Kupplung des Doppelkupplungsgetriebes ist angesteuert -
- Figur 3: ein Prinzipschaltbild der erfindungsgemäßen Ansteuereinrichtung gemäß den Figuren 1 und 2
- Normalbetriebszustand, nur die erste Kupplung des Doppelkupplungsgetriebes ist angesteuert -
- Figur 4: ein Prinzipschaltbild der erfindungsgemäßen Ansteuereinrichtung gemäß den Figuren 1, 2 und 3
- Notbetriebszustand, die erste Kupplung wird mit Hilfe des erfindungsgemäß vorgesehenen NotlaufKupplungsventils angesteuert -

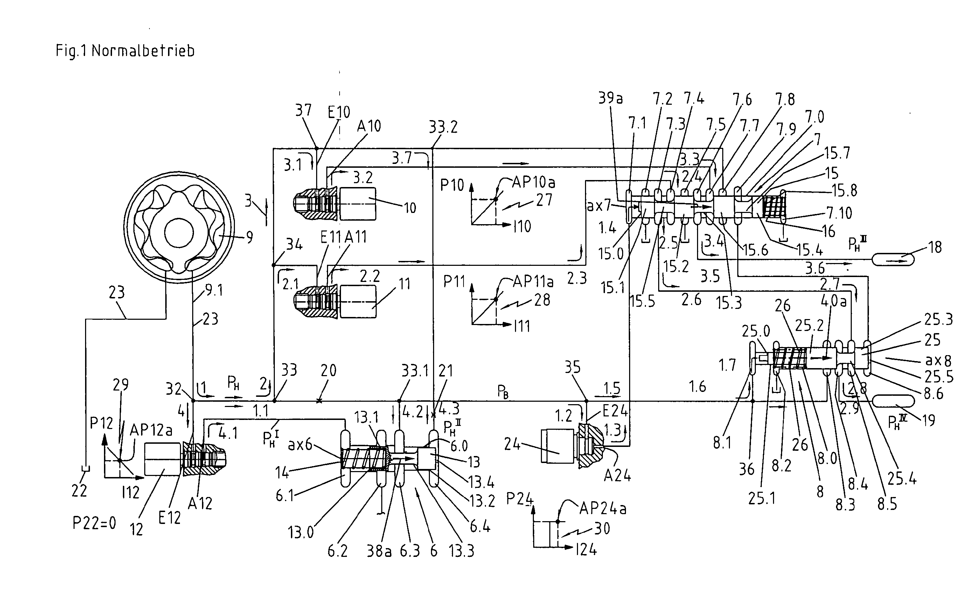

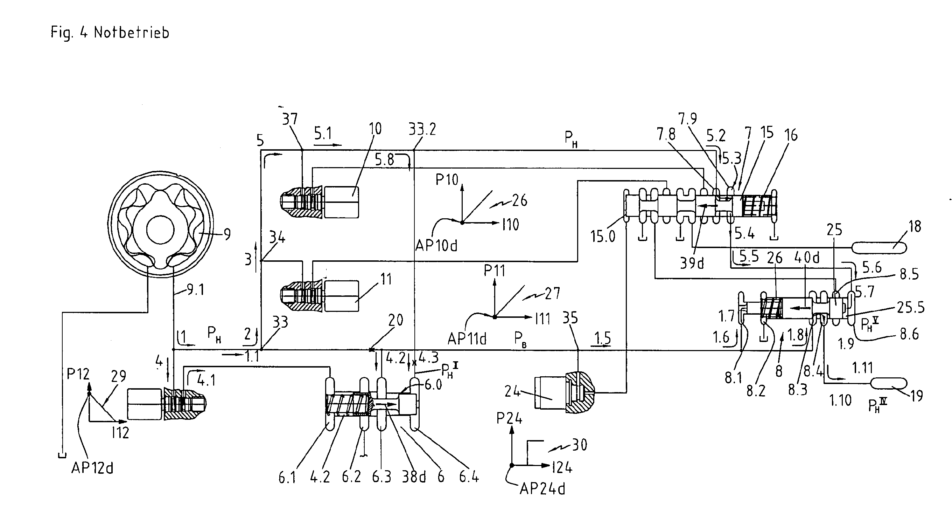

Die Figuren 1 bis 4 zeigen in Form von Prinzipschaltbildern ein Ausführungsbeispiel einer erfindungsgemäßen Ansteuereinrichtung für die Kupplungen 18, 19 eines an sich bekannten Doppelkupplungsgetriebes eines Kraftfahrzeugs in unterschiedlichen Betriebszuständen. Insbesondere zeigen die Figuren 1 bis 3 den Fluss der Hydraulikflüssigkeit im Normalbetrieb bei unterschiedlichen Schaltzuständen der elektrischen Steuerventile 10, 11 zur Betätigung der beiden Kupplungen 18, 19 des Doppelkupplungsgetriebes. Die Figur 4 zeigt demgegenüber den Fluss der Hydraulikflüssigkeit im Notbetrieb, d.h. bei unterbrochener elektrischer Versorgung der elektrisch angesteuerten Magnetventile 24, 10, 11, 12 und bei Betätigung einer Kupplung 19 mit Hilfe des erfindungsgemäß vorgesehenen Notlauf-Kupplungsventils 8.

Um in der nachfolgenden Beschreibung eine einheitliche und einfache Bezugnahme zu gewährleisten, sind die in allen Figuren 1 bis 4 identisch vorliegenden Elemente der beispielhaft skizzierten Ansteuereinrichtung mit einheitlichen Bezugszeichen versehen.

Die Zeichnungsfiguren zeigen als wesentliche Bauteile der erfindungsgemäßen Ansteuereinrichtung und des Doppelkupplungsgetriebes eine Getriebepumpe 9 zur Bereitstellung einer Hydraulikflüssigkeitsversorgung, ein Hauptdruckregelventil 6 zum Regeln des Drucks der von der Getriebepumpe 9 bereitgestellten Hydraulikflüssigkeit in einem Hydraulikflüssigkeitsleitungssystem 23, ein Steuerventil 12 zum Ansteuern des Hauptdruckregelventils 6, ein Sicherheitsventil 7 zum Steuern des Hydraulikflusses in Abhängigkeit von der gewählten Stellung des Schalthebels für das Automatikgetriebe des Kraftfahrzeugs, ein Öffnungsventil 24, um das Sicherheitsventil 7 bei einem Ausfall der elektrischen Stromversorgung in einen definierten Zustand zu Verbringen, zwei Steuerventile 10, 11 zum Ansteuern der beiden Kupplungen 18, 19 des Doppelkupplungsgetriebes sowie ein erfindungsgemäßes Notlauf-Kupplungsventil 8.

Das hydraulisch betätigbare Hauptdruckregelventil 6 umfasst im vorliegenden Beispiel ein im wesentlichen zylinderförmiges Steuergehäuse 6.0, welches über dessen axialer Erstreckung vier Schlitze (oder Taschen) 6.1, 6.2, 6.3, 6.4 aufweist.

In diesem Steuergehäuse 6.0 ist in axialer Richtung ein Kolben 13 begrenzt verschieblich geführt. Die erste Stirnseite 13.0 des Kolbens 13 bildet einen einendseitigen Anschlag an einer Endseite des Steuergehäuses 6.0. Zwischen der zweiten Stirnseite 13.4 des Kolbens 13 und der anderen Endseite des Steuergehäuses 6.0 ist eine Kolbenbetätigungsfeder 14 angeordnet, welche die erste Stirnseite 13.0 (bei fehlender sonstiger Krafteinwirkung auf den Kolben 13) gegen die eine Endseite des Steuergehäuses 6.0 gedrückt hält.

Der Kolben 13 weist längs seiner axialen Erstreckung ax₆ unterschiedliche Durchmesser auf. Es gibt zwei Kolbenabschnitte 13.1, 13.2 welche im wesentlichen formschlüssig in der Innenwandung des Steuergehäuses 6.0 geführt sind, sowie einen Kolbenabschnitt 13.3, welcher einen kleineren Außendurchmesser aufweist. Der Kolbenabschnitt 13.3 der letztgenannten Art ist in axialer Richtung ax₆ zwischen den beiden Kolbenabschnitten 13.1, 13.2 der erstgenannten Art angeordnet.

Erstreckt sich der Kolbenabschnitt 13.3 der letztgenannten Art in einer bestimmten Stellung des Kolbens 13 in dem Steuergehäuse 6.0 von dem Schlitz 6.2 zu dem benachbarten Schlitz 6.3, so ist ein Durchfluss der Hydraulikflüssigkeit zwischen diesen beiden benachbarten Schlitzen 6.2, 6.3 möglich. Der Kolbenabschnitt 13.3 der letztgenannten Art wird daher im folgenden als öffnender Kolbenabschnitt 13.3 bezeichnet, die anderen formschlüssig an der Innenwandung des Steuergehäuses 6.0 geführten Kolbenabschnitte 13.1, 13.2 werden nachfolgend als schließende Kolbenabschnitte 13.1, 13.2 bezeichnet, da hier kein Durchfluss von Hydraulikflüssigkeit zwischen benachbarten Schlitzen 6.2, 6.3 möglich ist.

Das hydraulisch betätigbare Sicherheitsventil 7 umfasst im vorliegenden Beispiel ähnlich dem vorstehend beschriebenen hydraulisch betätigbaren Hauptdruckregelventil 6 ein im wesentlichen zylinderförmiges Steuergehäuse 7.0, welches über dessen axialer ax₇ Erstreckung zehn Schlitze (oder Taschen) 7.1, 7.2, 7.3, 7.4, 7.5, 7.6, 7.7, 7.8, 7.9, 7.10 aufweist. In dem Steuergehäuse 7.0 ist in axialer Richtung ax₇ ein Kolben 15 begrenzt verschieblich geführt. Die erste Stirnseite 15.0 des Kolbens 15 bildet einen einendseitigen Anschlag an einer Endseite des Steuergehäuses 7.0. Zwischen die zweite Stirnseite 15.8 des Kolbens 15 und die anderen Endseite des Steuergehäuses 7.0 ist eine Kolbenbetätigungsfeder 16 eingesetzt, welche im dargestellten Zustand bei fehlender sonstiger Krafteinwirkung auf den Kolben 15 die erste Stirnseite 15.0 gegen die eine Endseite des Steuergehäuses 7.0 gedrückt hält.

Der Kolben 15 weist längs seiner axialen ax₇ Erstreckung unterschiedliche Durchmesser auf. Es gibt vier schließende Kolbenabschnitte 15.1, 15.2, 15.3, 15.4, welche im wesentlichen formschlüssig in der Innenwandung des Steuergehäuses 7.0 geführt sind, sowie drei zwischen diesen angeordnete öffnende Kolbenabschnitte 15.5, 15.6, 15.7, welche einen kleineren Außendurchmesser aufweisen. Der Kolben 15 kann entgegen der Betätigungskraft der Kolbenbetätigungsfeder 16 entsprechend des Betriebszustandes des Öffnungsventils 24 in zwei unterschiedliche Stellungen verbracht werden. Erstreckt sich ein öffnender Kolbenabschnitt 15.5, 15.6, 15.7 in einer bestimmten Stellung des Kolbens 15 in dem Steuergehäuse 7.0 von einem Schlitz 7.1, 7.2, 7.3, 7.4, 7.5, 7.6, 7.7, 7.8, 7.9, 7.10 zu einem benachbarten Schlitz 7.1, 7.2, 7.3, 7.4, 7.5, 7.6, 7.7, 7.8, 7.9, 7.10, so ist ein Durchfluss der Hydraulikflüssigkeit zwischen diesen beiden benachbarten Schlitzen 7.1, 7.2, 7.3, 7.4, 7.5, 7.6, 7.7, 7.8, 7.9, 7.10 möglich.

Auch das Notlauf-Kupplungsventil 8 ist ähnlich den vorbeschriebenen Ventilen 6 und 7 hydraulisch betätigbar ausgeführt. Insbesondere umfasst das Notlauf-Kupplungsventil 8 im vorliegenden Beispiel ein im wesentlichen zylinderförmiges Steuergehäuse 8.0, welches über dessen axialer ax₈ Erstreckung sechs Schlitze 8.1, 8.2, 8.3, 8.4, 8.5, 8.6 aufweist.

In dem Steuergehäuse 8.0 ist in axialer Richtung ax₈ ein Kolben 25 begrenzt verschieblich geführt. Beide Stirnseiten 25.0, 25.5 des Kolbens 25 bilden endseitige Anschläge an den jeweiligen Endseiten des Steuergehäuses 8.0. Eine Kolbenbetätigungsfeder 26 ist so in das Steuergehäuse 8.0 des Notlauf-Kupplungsventils 8 eingesetzt, dass die zweite Stirnseite 25.5 (wiederum bei vernachlässigbarer sonstiger Krafteinwirkung auf den Kolben 25) gegen die eine Endseite des Steuergehäuses 8.0 gedrückt gehalten wird.

Der Kolben 25 weist ähnlich den vorgenannten Ausführungsformen von Ventilen 6,7 längs seiner axialen ax₈ Erstreckung unterschiedliche Durchmesser auf. Hier gibt es drei schließende Kolbenabschnitte 25.1, 25.2, 25.3, welche im wesentlichen formschlüssig in der Innenwandung des Steuergehäuses 8.0 geführt sind sowie einen zwischen den Kolbenabschnitten 25.2, 25.3 angeordneten öffnenden Kolbenabschnitt 25.4, welcher einen gegenüber dem Innendurchmesser der Innenwandung des Steuergehäuses 8.0 kleineren Außendurchmesser aufweist. Entsprechend den vorstehend beschriebenen Ventilen 6,7 kann der Kolben 25 entgegen der Betätigungskraft der Kolbenbetätigungsfeder 26 in eine beliebige Zwischenstellung verbracht werden. Erstreckt sich der öffnende Kolbenabschnitt 25.4 in einer bestimmten Stellung des Kolbens 25 in dem Steuergehäuse 8.0 von einem Schlitz 8.3, 8.4, 8.5 zu einem benachbarten Schlitz 8.3, 8.4, 8.5, so ist wie vorhin ein Durchfluss der Hydraulikflüssigkeit zwischen diesen beiden benachbarten Schlitzen 8.3, 8.4, 8.5 möglich.

Das Steuerventil 10 für die zweite Kupplung 18 und das Steuerventil 11 für die erste Kupplung 19 sind weitgehend identisch als elektrisch ansteuerbare Magnetventile ausgeführt. Sie weisen jeweils eine Eingangsöffnung E₁₀, E₁₁ und eine Ausgangsöffnung A₁₀, A₁₁ für die Hydraulikflüssigkeit auf. Die Steuerkennlinien 27, 28 der beiden Steuerventile 10, 11 zeigen eine Proportionalität zwischen dem zugeführten elektrischen Steuerstrom I₁₀, I₁₁ und dem Öffnungs- bzw. Betätigungsdruck P₁₀, P₁₁.

Das Steuerventil 12 für das Hauptdruckregelventil 6 ist ebenfalls als elektrisch ansteuerbares Magnetventil mit einer Eingangsöffnung E₁₂ und einer Ausgangsöffnung A₁₂ für die Hydraulikflüssigkeit ausgeführt. Die Steuercharakteristik diese Steuerventils 12 weist jedoch einen von den Steuerkennlinien 27, 28 der vorbeschriebenen Steuerventile 10, 11 abweichenden Verlauf auf. Hier nimmt gemäß der Steuerkennlinie 29 der Betätigungsdruck P₁₂ mit zunehmendem Steuerstrom I₁₂ ab.

Das Öffnungsventil 24 ist ebenfalls als elektrisch ansteuerbares Magnetventil mit einer Eingangsöffnung E₂₄ und einer Ausgangsöffnung A₂₄ für die Hydraulikflüssigkeit ausgeführt. Dieses Öffnungsventil 24 weist vorliegend nur zwei Schaltzustände auf: Bei elektrischer Ansteuerung ist das Öffnungsventil 24 geöffnet, bei fehlender elektrischer Ansteuerung ist das Öffnungsventil 24 geschlossen. Die korrespondierende Steuerkennlinie 30 des Betätigungsdruckes P₂₄ als Funktion der Eingangsstromstärke I₂₄ entnimmt man ebenfalls den Figuren 1 bis 4.

Die einzelnen vorstehend beschriebenen Einzelbauteile der Ansteuereinrichtung bzw. des Automatikgetriebes sind über ein über die Getriebepumpe 9 mit Hydraulikflüssigkeit versorgbares, nachfolgend im Einzelnen beschriebenes Leitungssystem 23 verbunden.

Die Getriebepumpe 9 ist zunächst über eine Leitung 23 mit einem Tank oder Reservoir 22 verbunden. Es existiert ferner eine Leitungsverbindung vom Pumpenaustritt 9.1 der Getriebepumpe 9 über den Leitungsknoten 32 zur Eingangsöffnung E₁₂ des Steuerventils 12. Von der Ausgangsöffnung A₁₂ besteht ferner eine Verbindung zum Schlitz 6.1 des Steuergehäuses 6.0 des Hauptdruckregelventils 6.

Ausgehend vom Leitungsknoten 32 führt eine Verbindung zum Leitungsknoten 33. Von dort bestehen Verbindungen über die Durchflussblende 20, den Leitungsknoten 33.1 zum Schlitz 6.3.

Vom Leitungsknoten 33.1 geht eine Leitung 23 weiter zum Leitungsknoten 35. Der Leitungsknoten 35 ist einerseits mit der Eingangsöffnung E₂₄ des Öffnungsventils 24 verbunden, dessen Ausgangsöffnung A₂₄ über eine Leitung 23 mit dem Schlitz 7.1 im Steuergehäuse 7.0 des Sicherheitsventils verbunden ist. Andererseits ist der Leitungsknoten 35 weiter auf den Leitungsknoten 36 geführt, von dem einerseits eine Verbindung zum Schlitz 8.1 und andererseits eine Verbindung zum Schlitz 8.3 im Steuergehäuse 8.0 des Notfall-Kupplungsventils 8 besteht.

Weiter besteht eine Leitungsverbindung vom Leitungsknoten 33 zum Leitungsknoten 34. Der Leitungsknoten 34 ist einerseits mit der Eingangsöffnung E₁₁ des Steuerventils 11 für die erste Kupplung 19 verbunden und andererseits über den Leitungsknoten 37 mit der Eingangsöffnung E₁₀ des Steuerventils 10 für die zweite Kupplung 18. Der Leitungsknoten 37 stellt weiterhin eine Verbindung zum Schlitz 7.8 im Steuergehäuse 7.0 des Sicherheitsventils 7 her, sowie weiter über den Leitungsknoten 33.2 und die Durchflussblende 21 zum Schlitz 6.4 des Steuergehäuses 6.0 des Hauptdruckregelventils 6.

Die Ausgangsöffnung A₁₁ des Steuerventils 11 für die erste Kupplung 19 ist über eine mit Hydraulikflüssigkeit befüllbare Leitung 23 mit dem Schlitz 7.4 des Steuergehäuses 7.0 des Sicherheitsventils 7 verbunden.'

Die Ausgangsöffnung A₁₀ des Steuerventils 10 für die zweite Kupplung 18 ist über eine mit Hydraulikflüssigkeit befüllbare Leitung 23 mit dem Schlitz 7.7 des Steuergehäuses 7.0 des Sicherheitsventils 7 verbunden.

Fernerhin bestehen zum Einen Verbindungen zwischen dem Schlitz 7.3 im Steuergehäuse 7.0 des Sicherheitsventils 7 und dem Schlitz 8.5 im Steuergehäuse 8.0 des Notlauf-Kupplungsventils 8 sowie zum Anderen zwischen dem Schlitz 7.9 im Steuergehäuse 7.0 des Sicherheitsventils 7 und dem Schlitz 8.6 im Steuergehäuse 8.0 des Notlauf-Kupplungsventils 8.

Der Schlitz 7.6 im Steuergehäuse 7.0 des Sicherheitsventils 7 ist über eine Leitung 23 mit der Betätigungseinrichtung der zweiten Kupplung 18 verbunden. Der Schlitz 8.4 im Steuergehäuse 8.0 des Notlauf-Kupplungsventils 8 ist über eine weitere Leitung 23 mit der Betätigungseinrichtung der ersten Kupplung 19 verbunden.

Die übrigen Schlitze 7.2, 7.5, 7.10 im Steuergehäuse 7.0 des Sicherheitsventils 7, der Schlitz 8.2 im Steuergehäuse 8.0 des Notlauf-Kupplungsventils 8 sowie der Schlitz 6.2 des Steuergehäuses 6.0 des Hauptdruckregelventils 6 sind mit dem Tank/Reservoir 22 des Automatikgetriebes verbunden.

Nachfolgend wird zunächst der Normalbetriebszustand der Ansteuereinrichtung gemäß der Figur 1 beschrieben:

Der Schalthebel für das Automatikgetriebe im Kraftfahrzeug ist in der Stellung "D" ("Drive"). Es wird angenommen, dass der Verbrennungsmotor des Kraftfahrzeugs mit einer mittleren Drehzahl betrieben wird und die Getriebepumpe 9 antreibt, so dass an deren Pumpenaustritt 9.1 ein Hydraulikflüssigkeits-Hauptdruck P_{H} aufgebaut wird, welcher mit Hilfe der beiden Ventile 6 und 12 regelbar ist.

Es besteht eine ordnungsgemäße elektrische Stromversorgung zu allen elektrisch betätigbaren Magnetventilen, nämlich dem Steuerventil 11 für die erste Kupplung 19, zu dem Steuerventil 10 für die zweite Kupplung 18, zu dem Steuerventil 12 für das Hauptdruckregelventil 6 sowie zu dem Öffnungsventil 24. Alle Magnetventile 11, 10, 12 und 24 werden entsprechend den in den Steuerkennlinien 27, 28, 29 und 30 eingezeichneten Arbeitspunkten AP11a, AP10a, AP12a und AP24a elektrisch angesteuert. Alle Magnetventile 11, 10, 12 und 24 sind (in wenigstens teilweise) geöffnetem Zustand.

Der teilweise geöffnete Zustand des Steuerventils 12 führt dazu, dass Hydraulikflüssigkeit zunächst mit dem Druck P_{H} längs der Flussrichtung 4 auf die Eingangsöffnung E₁₂ des Steuerventils 12 geführt wird und über dessen Ausgangsöffnung A₁₂ mit geringfügig vermindertem Druck P_{H}^{I} der Flussrichtung 4.1 und den Schlitz 6.1 auf die Stirnseite 13.0 des Kolbens 13 wirkt. Weiterhin führen Hydraulikflüssigkeitsflüsse längs 1.1 und die Durchflussblende 20 sowie (mit dem Druck P_{B}) 4.2 zu dem Schlitz 6.3. Gleichzeitig führt ein Hydraulikflüssigkeitsfluss längs 2, 3 und 3.7 die Durchflussblende 21 und den Pfad 4.3 zum Schlitz 6.4, wo er mit dem Druck P_{H}^{II} auf die andere Stirnseite 13.4 des Kolbens 13 wirkt. Die Richtung der Summe der auf den Kolben 13 wirkenden und diesen in die gezeichnete Position verbringenden Kräfte 38a (inklusive der Federkraft der Kolbenbetätigungsfeder 14) ist in der Zeichnungsfigur 1 mit einem Pfeil gekennzeichnet.

Weiterhin wird der Druck P_{B} über die Flüssigkeitspfade 1.2, 1.3 und 1.4 auf die erste Stirnseite 15.0 des Kolbens 15 geführt, welcher infolgedessen nach rechts verschoben wird (Pfeilrichtung 39a). In ähnlicher Weise wird der Kolben 25 aufgrund des über die Flüssigkeitspfade 1.5, 1.6, 1,7 auf dessen Stirnseite 25.0 geleiteten hydraulischen Drucks P_{B} und einer fehlenden Gegenkraft bzw. eines fehlenden Gegendrucks an die rechte Anschlagsbegrenzung gedrückt (Pfeilrichtung 40a).

Der Hydraulikflüssigkeits-Hauptdruck P_{H} wird vorliegend über die Pfade 2, 2.1 zum geöffneten Steuerventil 11 und von dort weiter über die Pfade 2.2, 2.3, 2.4 zum Sicherheitsventil 7 geführt. Hier wird der Hydraulikflüssigkeits-Hauptdruck P_{H} über die geöffneten und verbundenen Schlitze 7.4 und 7.3 auf den Pfad 2.5 geleitet, welcher über den Pfad 2.6 und den Pfad 2.7 zum Schlitz 8.5 des Notlauf-Kupplungsventils 8 führt. Von dort besteht eine Verbindung zum Schlitz 8.4, wo der modifizierte Hydraulikflüssigkeits-Hauptdruck P_{H}^{IV} schließlich über die Pfade 2.8 und 2.9 die erste Kupplung 19 betätigt.

Fernerhin wird der Hydraulikflüssigkeits-Hauptdruck P_{H} vorliegend über die Pfade 2, 3, 3.1 zum geöffneten Steuerventil 10 und von dort weiter über die Pfade 3.2, 3.3 zum Sicherheitsventil 7 geleitet. Hier wird der modifizierte Hydraulikflüssigkeits-Hauptdruck P_{H} über die geöffneten und verbundenen Schlitze 7.7 und 7.6 auf den Pfad 3.4 geleitet, wo der modifizierte Hydraulikflüssigkeits-Hauptdruck P_{H} ^{III} schließlich über die Pfade 3.5 und 3.6 die zweite Kupplung 18 betätigt.

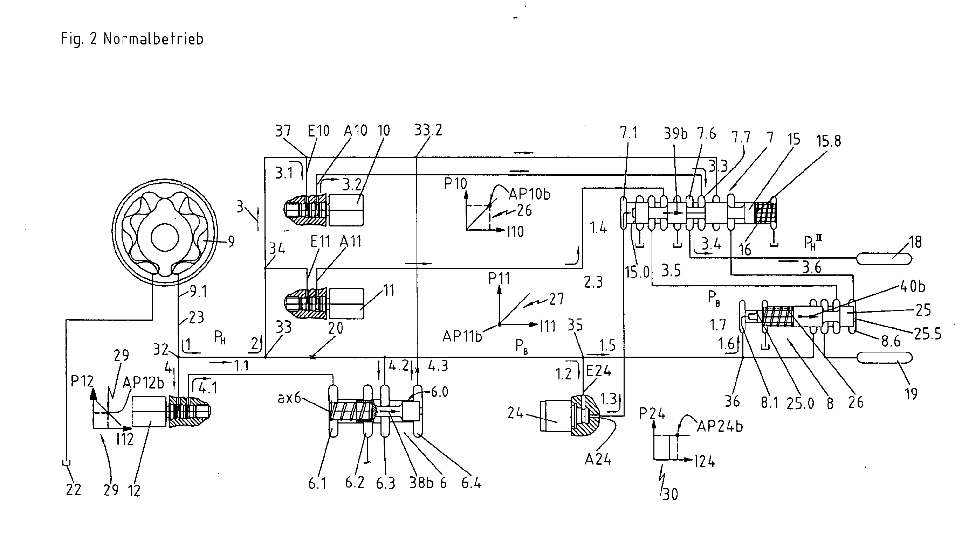

In einem zweiten Schritt wird nunmehr der Normalbetriebszustand der Ansteuereinrichtung gemäß der Figur 2 beschrieben:

Der Schalthebel für das Automatikgetriebe im Kraftfahrzeug befindet sich wiederum in der Stellung "D" ("Drive"). Es wird wieder angenommen, dass der Verbrennungsmotor des Kraftfahrzeugs mit einer mittleren Drehzahl betrieben wird und die Getriebepumpe 9 antreibt.

Auch hier besteht eine ordnungsgemäße elektrische Stromversorgung zu allen elektrisch betätigbaren Magnetventilen, nämlich dem Steuerventil 11 für die erste Kupplung 19, zu dem Steuerventil 10 für die zweite Kupplung 18, zu dem Steuerventil 12 für das Hauptdruckregelventil 6 sowie zu dem Öffnungsventil 24. Alle Magnetventile 11, 10, 12 und 24 werden entsprechend den in den Steuerkennlinien 27, 28, 29 und 30 eingezeichneten Arbeitspunkten AP11b, AP10b, AP12b und AP24b elektrisch angesteuert. Die Ventile 10, 12 und 24 sind im gleichen Zustand wie im vorangegangenen Beispiel (AP10b, AP12b, AP24b), d.h. wenigstens teilweise geöffnet. Lediglich das Steuerventil 11 der ersten Kupplung 19 ist vorliegend stromlos, also geschlossen (AP11b).

Damit ergeben sich zunächst dieselben Ventilstellungen für die Ventile 6, 7 und 8. Zur Verdeutlichung sind - wie im vorangegangenen Beispiel- die jeweiligen Richtungen der Summe der auf die Kolben 13, 15 und 25 wirkenden Kräfte durch entsprechende mit den Bezugszeichen 38b, 39b, 40b versehene Richtungspfeile gekennzeichnet.

Der Hydraulikflüssigkeits-Hauptdruck P_{H} wird vorliegend zwar über die Pfade 2, 3, 3.1 zum geöffneten Steuerventil 10 und von dort weiter über die Pfade 3.2, 3.3 zum Sicherheitsventil 7 und schließlich über die geöffneten und verbundenen Schlitze 7.7 und 7.6 auf den Pfad 3.4 geleitet, wo der modifizierte Hydraulikflüssigkeits-Hauptdruck P_{H} ^{III} über die Pfade 3.5 und 3.6 die zweite Kupplung 18 betätigt, aufgrund des geschlossenen Steuerventils 11 erfolgt jedoch keine Betätigung der ersten Kupplung 19.

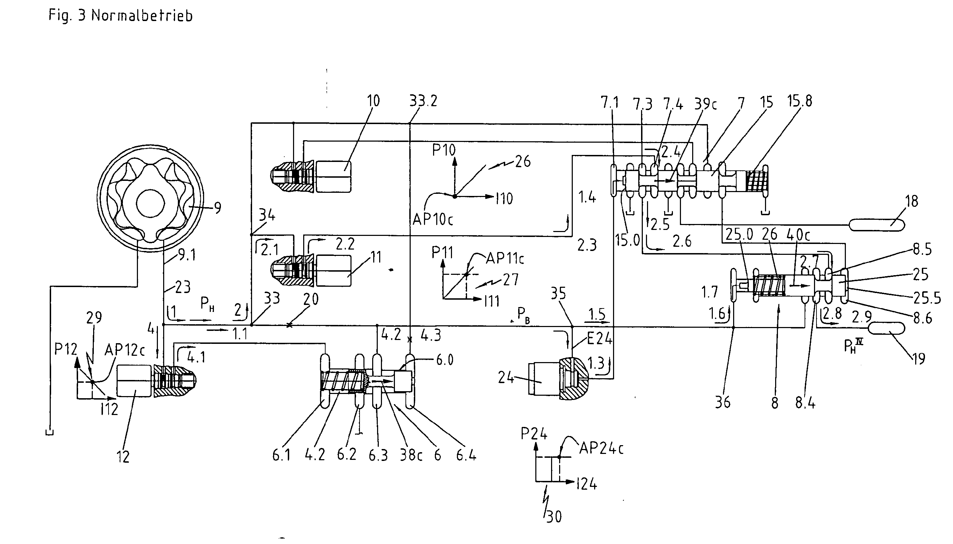

Ähnlich sind die Verhältnisse, wenn wie gemäß der Figur 3 das Steuerventil 10 stromlos ist und die übrigen elektrisch betätigbaren Ventile 11, 12 und 24 entsprechend dem Betriebszustand gemäß der Figur 1 betrieben werden (AP11c, AP10c, AP12c und AP24c).

Auch hier ergeben sich zunächst dieselben Ventilstellungen für die Ventile 6, 7 und 8. Zur Verdeutlichung sind -wie in den vorangegangenen Beispielen- die jeweiligen Richtungen der Summe der auf die Kolben 13, 15 und 25 wirkenden Kräfte durch entsprechende mit den Bezugszeichen 38c, 39c, 40c versehene Richtungspfeile gekennzeichnet.

Der Hydraulikflüssigkeits-Hauptdruck P_{H} wird vorliegend über die Pfade 2, 2.1 zum geöffneten Steuerventil 11 und von dort weiter über die Pfade 2.2, 2.3, 2.4 zum Sicherheitsventil 7 geführt. Hier wird der Hydraulikflüssigkeits-Hauptdruck P_{H} über die geöffneten und verbundenen Schlitze 7.4 und 7.3 auf den Pfad 2.5 geleitet, welcher über den Pfad 2.6 und den Pfad 2.7 zum Schlitz 8.5 des Notlauf-Kupplungsventils 8 führt. Von dort besteht eine Verbindung zum Schlitz 8.4, wo der modifizierte Hydraulikflüssigkeits-Hauptdruck P_{H}^{IV} schließlich über die Pfade 2.8 und 2.9 die erste Kupplung 19 betätigt. Aufgrund des geschlossenen Steuerventils 10 erfolgt hier keine Betätigung der zweiten Kupplung 18.

Abweichend hierzu sind die Verhältnisse in dem in der Figur 4 dargestellten Fall:

Der Schalthebel für das Automatikgetriebe im Kraftfahrzeug ist wie in den vorangehend geschilderten Betriebszuständen in der Stellung "D" ("Drive"). Es wird angenommen, dass der Verbrennungsmotor des Kraftfahrzeugs wiederum mit einer mittleren Drehzahl betrieben wird und die Getriebepumpe 9 antreibt, so dass an deren Pumpenaustritt 9.1 ein Hydraulikflüssigkeits-Hauptdruck P_{H} aufgebaut wird.

In diesem Fall besteht jedoch keine ordnungsgemäße elektrische Stromversorgung zu den elektrisch betätigbaren Magnetventilen, nämlich dem Steuerventil 11 für die erste Kupplung 19, zu dem Steuerventil 10 für die zweite Kupplung 18, zu dem Steuerventil 12 für das Hauptdruckregelventil 12 sowie zu dem Öffnungsventil 24. Alle Magnetventile 11, 10, 12 und 24 (oder zumindest die Magnetventile 10 und 11) sind stromlos. Dadurch ergeben sich die in den Steuerkennlinien 27, 28, 29 und 30 eingezeichneten Arbeitspunkte AP11d, AP10d, AP12d und AP24d. Die Ventile 11, 10 und 24 sind geschlossen, das Steuerventil 12 ist in geöffnetem Zustand.

Der geöffnete Zustand des Steuerventils 12 führt dazu, dass Hydraulikflüssigkeit mit dem Druck P_{H} längs der Flussrichtung 4 auf die Eingangsöffnung E₁₂ des Steuerventils 12 und über dessen Ausgangsöffnung A₁₂ längs der Flussrichtung 4.1 und den Schlitz 6.1 auf die Stirnseite 13.0 des Kolbens 13 wirkt. Weiterhin führen Hydraulikflüssigkeitsflüsse längs 1.1 und die Durchflussblende 20 sowie (mit dem Druck P_{B}) 4.2 zu dem Schlitz 6.3. Gleichzeitig führt ein Hydraulikflüssigkeitsfluss längs 1.1, 2, 3, 5, 5.1, 5.8, die Durchflussblende 21 und den Pfad 4.3 zum Schlitz 6.4, wo er mit dem Druck P_{H} ^{II} auf die andere Stirnseite 13.4 des Kolbens 13 wirkt. Die Richtung der Summe der auf den Kolben (13) wirkenden und diesen in die gezeichnete Position verbringenden Kräfte 38d (inklusive der Federkraft der Kolbenbetätigungsfeder) ist in der Zeichnungsfigur 4 mit einem Pfeil gekennzeichnet.

Aufgrund des geschlossenen Steuerventils 24 wird vorliegend die Verbindungsleitung zwischen dem Ausgang des Steuerventils 24 und dem Schlitz 7.1 des Sicherheitsventils 7 nicht mit Hydraulikflüssigkeit von der Getriebepumpe 9 versorgt. Die Leitung ist demzufolge weitgehend drucklos. Dies hat zur Folge, dass auf die erste Stirnseite 15.0 des Kolbens 15 keine den Kolben 15 in der vorgehend angegebenen Richtung 39a verschiebende Druckkraft wirkt. Auf die zweite Stirnseite 15.8 des Kolbens 15 wirkt jedoch weiterhin die entgegengesetzt gerichtete Federkraft der Kolbenbetätigungsfeder 16. Die Summe der auf den Kolben 15 wirkenden Kräfte entspricht nunmehr also der Federkraft der Kolbenbetätigungsfeder 16. Die Kraftrichtung 39d der Summenkraft zeigt folglich entgegen der vorstehend skizzierten Richtungen 39a, 39b, 39c gemäß den in den Zeichnungsfiguren 1 bis 3 dargestellten Normalbetriebszuständen, so dass der Kolben 15 sich nunmehr durch dessen erste Stirnseite 15.0 anschlagsbegrenzt ist.

Unabhängig von den Stellungen der Steuerventile 10, 11 sind aufgrund der jetzt vorliegenden Kolbenstellung des Kolbens 15 in dem Steuergehäuse 7.0 des Sicherheitsventils 7 die direkten Leitungsverbindungen von der Getriebepumpe 9 zu den Betätigungseinrichtungen der beiden Kupplungen 18, 19 unterbrochen (schließende Kolbenabschnitte 15.2, 15.3). Dahingegen besteht nunmehr eine direkte den Hydraulikflüssigkeits-Hauptdruck P_{H} führende Verbindung zwischen der Getriebepumpe 9 und dem Schlitz 8.6 im Steuergehäuse 8.0 des Notlaufkupplungsventils 8 über die Hydraulikflüssigkeitsflussrichtungen 1, 2, 3, 5, 5.1, 5.2, 5.3, die Schlitze 7.9, 7.8 (öffnender Kolbenabschnitt 15.7) und die Hydraulikflüssigkeitsflussrichtungen 5.4, 5.5, 5.6 und 5.7. Dieser modifizierte Hydraulikflüssigkeits-Hauptdruck P_{H}^{V} wirkt dort unmittelbar auf die zweite Stirnseite 25.5 des Kolbens 25.

Gleichzeitig besteht eine Leitungsverbindung zwischen der Getriebepumpe 9 und dem Schlitz 8.1 des Notlauf-Kupplungsventils 8 über die Hydraulikflüssigkeitsflussrichtungen 1, 1.1, 1.5, 1.6 und 1.7, wobei der Druck P_{B} der Hydraulikflüssigkeit hinter der Durchflussblende 20 auf einen Bruchteil des Hydraulikflüssigkeits-Hauptdruck P_{H} reduziert ist. Dieser reduzierte Druck P_{B} der Hydraulikflüssigkeit hinter der Durchflussblende 20 wirkt entsprechend auf die erste Stirnseite 25.0 des Kolbens 25.

Die Richtung 40d der Summe der auf den Kolben 25 wirkenden Kräfte, nämlich die auf die erste Stirnseite 25.0 des Kolbens 25 wirkende Druckkraft P_{B}, die auf die zweite Stirnseite 25.5 des Kolbens 25 wirkende Druckkraft P_{H}^{V} sowie die Federkraft der Kolbenbetätigungsfeder 26, wirkt nunmehr entgegen der Richtung der angreifenden Kräfte 40a, 40b, 40c im Normalbetriebszustand (Fig. 1 bis 3), so dass der Kolben vorliegend gegen den Anschlag der ersten Stirnseite 25.0 des Kolbens 25 gehalten wird, oder eine Zwischenstellung einnimmt.

Entsprechend dieser Kolbenstellung des Kolbens 25 in dem Steuergehäuse 8.0 des Notlauf-Kupplungsventils 8 wird vorliegend der Druck P_{B} über die Pfade 1, 1.1, 1.5, 1.8 zum Schlitz 8.3 im Steuergehäuse 8.0 des Notlauf-Kupplungsventils 8 geführt, wo er über den öffnenden Kolbenabschnitt 25.4 zum Schlitz 8.4 im Steuergehäuse 8.0 des Notlauf-Kupplungsventils 8 gelangt und von wo er über die Pfade 1.9, 1.10 und 1.11 zur Betätigungseinrichtung der ersten Kupplung 19 gelangt (Druck P_{H}^{IV}). Es versteht sich von selbst, dass entsprechend auch der Hydraulikflüssigkeits-Hauptdruck P_{H} zur Betätigungseinrichtung der zweiten Kupplung 18 geführt werden könnte.

### Bezugszeichenliste

- 1: Hydraulikflüssigkeitsflussrichtung
- 1.1 ... 1.11: Hydraulikflüssigkeitsflussrichtung
- 2: Hydraulikflüssigkeitsflussrichtung
- 2.1 ... 2.9: Hydraulikflüssigkeitsflussrichtung
- 3: Hydraulikflüssigkeitsflussrichtung
- 3.1 ... 3.7: Hydraulikflüssigkeitsflussrichtung
- 4: Hydraulikflüssigkeitsflussrichtung
- 4.1 ... 4.3: Hydraulikflüssigkeitsflussrichtung
- 5: Hydraulikflüssigkeitsflussrichtung
- 5.1 ... 5.8: Hydraulikflüssigkeitsflussrichtung

- 6: Hauptdruckregelventil
- 6.0: Steuergehäuse des Hauptdruckregelventils
- 6.1 ... 6.4: Schlitz/Tasche im Steuergehäuse des Hauptdruckregelventils

- 7: Sicherheitsventil
- 7.0: Steuergehäuse des Sicherheitsventils
- 7.1 ... 7.10: Schlitz/Tasche im Steuergehäuse des Sicherheitsventils

- 8: Notlauf-Kupplungsventil
- 8.0: Steuergehäuse des Notlauf-Kupplungsventils
- 8.1 ... 8.6: Schlitz/Tasche im Steuergehäuse des Notlauf-Kupplungsventils

- 9: Getriebepumpe
- 9.1: Pumpenaustritt

- 10: Steuerventil für die zweite Kupplung
- 11: Steuerventil für die erste Kupplung
- 12: Steuerventil für das Hauptdruckregelventil

- 13: Kolben des Hauptdruckregelventils
- 13.0: erste Stirnseite des Kolbens
- 13.1, 13.2: schließender Kolbenabschnitt
- 13.3: öffnender Kolbenabschnitt
- 13.4: zweite Stirnseite des Kolbens
- 14: Kolbenbetätigungsfeder

- 15: Kolben des Sicherheitsventils
- 15.0: erste Stirnseite des Kolbens
- 15.1 ... 15.4: schließender Kolbenabschnitt
- 15.5 ... 15.7: öffnender Kolbenabschnitt
- 15.8: zweite Stirnseite des Kolbens
- 16: Kolbenbetätigungsfeder

- 18: zweite Kupplung
- 19: erste Kupplung

- 20: Durchflussblende
- 21: Durchflussblende

- 22: Tank/Reservoir
- 23: Leitung

- 24: Öffnungsventil

- 25: Kolben des Notlauf-Kupplungsventils
- 25.0: erste Stirnseite des Kolbens
- 25.1 ... 25.3: schließender Kolbenabschnitt
- 25.4: öffnender Kolbenabschnitt

- 25.5: zweite Stirnseite des Kolbens
- 26: Kolbenbetätigungsfeder

- 27: Steuerkennlinie
- 28: Steuerkennlinie
- 29: Steuerkennlinie
- 30: Steuerkennlinie

- 31: Betätigungsstange
- 31.1: Rolle

- 32: Leitungsknoten
- 33: Leitungsknoten
- 33.1 ... 33.2: Leitungsknoten
- 34: Leitungsknoten
- 35: Leitungsknoten
- 36: Leitungsknoten
- 37: Leitungsknoten

- 38a ... 38d: Richtung der Summe der auf den Kolben 13 wirkenden Kräfte

- 39a ... 39d: Richtung der Summe der auf den Kolben 15 wirkenden Kräfte

- 40a ... 40d: Richtung der Summe der auf den Kolben 25 wirkenden Kräfte

- AP10a .. AP10d: Arbeitspunkt
- AP11a .. AP11d: Arbeitspunkt
- AP12a .. AP12d: Arbeitspunkt
- AP24a .. AP24d: Arbeitspunkt

- ax₆: Schubachse des Hauptdruckregelventils
- ax₇: Schubachse des Sicherheitsventils
- ax₈: Schubachse des Notlauf-Kupplungsventils
- A₁₀: Ausgangsöffnung für die Hydraulikflüssigkeit am Steuerventil 10
- A₁₁: Ausgangsöffnung für die Hydraulikflüssigkeit am Steuerventil 11
- A₁₂: Ausgangsöffnung für die Hydraulikflüssigkeit am Steuerventil 12
- A₂₄: Ausgangsöffnung für die Hydraulikflüssigkeit am Öffnungsventil 24

- E₁₀: Eingangsöffnung für die Hydraulikflüssigkeit am Steuerventil 10
- E₁₁: Eingangsöffnung für die Hydraulikflüssigkeit am Steuerventil 11
- E₁₂: Eingangsöffnung für die Hydraulikflüssigkeit am Steuerventil 12
- E₂₄: Eingangsöffnung für die Hydraulikflüssigkeit am Öffnungsventil 24

- P_{H} ,: Hydraulikflüssigkeits-Hauptdruck
- P_{H}, P_{H}^{II}, P_{H}^{III} P_{H}^{IV}, P_{H}^{V}: vom Hydraulikflüssigkeits-Hauptdruck abgeleiteter verminderter Druck

- P_{B}: Druck der Hydraulikflüssigkeit hinter der Durchflussblende 20
- P₀: Druck der Hydraulikflüssigkeit
- P₂₂: Druck der Hydraulikflüssigkeit im Tank/Reservoir 22

- P₁₀: Betätigungsdruck für das Steuerventil 10
- P₁₁: Betätigungsdruck für das Steuerventil 11
- P₁₂: Betätigungsdruck für das Steuerventil 12
- P₂₄: Betätigungsdruck für das Öffnungsventil 24

- I₁₀: elektrische Stromstärke durch das Solenoid des Steuerventils 10
- I₁₁: elektrische Stromstärke durch das Solenoid des Steuerventils 11
- I₁₂: elektrische Stromstärke durch das Solenoid des Steuerventils 12
- I₂₄: elektrische Stromstärke durch das Solenoid des Öffnungsventils 24

## Patentansprüche

1. Ansteuereinrichtung zum Betätigen einer hydraulisch betätigbaren Kupplung (19) eines Automatikgetriebes
- mit einem für einen Normalbetrieb vorgesehenen elektrisch ansteuerbaren Steuerventil (11), welches im elektrisch angesteuerten Zustand eine Beaufschlagung der Kupplung (19) mit einem Druck (P_{H}) einer Hydraulikflüssigkeit zum Betätigen der Kupplung (19) ermöglicht,
**dadurch gekennzeichnet, dass**
- ein bei fehlender elektrischer Ansteuerbarkeit des Steuerventils (11) hydraulisch ansteuerbares Notlauf-Kupplungsventil (8) für einen Notbetrieb vorgesehen ist, welches eine Beaufschlagung der Kupplung (19) mit dem Druck (P_{H}) der Hydraulikflüssigkeit zum Betätigen ' der Kupplung (19) ermöglicht.

2. Ansteuereinrichtung nach Anspruch 1, **dadurch gekennzeichnet, dass** das Notlauf-Kupplungsventil (8) mit einem hydraulischen Druck (P_{B}) ansteuerbar ist, welcher von einer Drehzahl eines Motors abhängig ist.

3. Ansteuereinrichtung nach Anspruch 2, **dadurch gekennzeichnet, dass** das Notlauf-Kupplungsventil (8) mit einem hydraulischen Druck (P_{B}) ansteuerbar ist, welcher im wesentlichen proportional der Drehzahl des Motors ist.

4. Ansteuereinrichtung nach einem der Ansprüche 2 oder 3, **dadurch gekennzeichnet, dass** bei einer Leerlaufdrehzahl des Motors das Notlauf-Kupplungsventil (8) geschlossen ist.

5. Ansteuereinrichtung nach einem der Ansprüche 2 bis 4, **da-durch gekennzeichnet, dass** bei einer vorgebbaren Drehzahl des Motors das Notlauf-Kupplungsventil (8) zu öffnen ist.

6. Ansteuereinrichtung nach einem der Ansprüche 2 bis 5, **da-durch gekennzeichnet, dass** bei einer vorgebbaren Drehzahl des Motors das Notlauf-Kupplungsventil (8) maximal geöffnet ist.

7. Ansteuereinrichtung nach einem der Ansprüche 2 bis 6, wobei Bestandteil des Automatikgetriebes eine von dem Motor angetriebene Getriebepumpe (9) ist, welche zum Bereitstellen des hydraulischen Drucks (P_{H}) zur Betätigung der Kupplung (19) an einem Pumpenaustritt (9.1) ausgebildet ist, **dadurch gekennzeichnet, dass** an einer mit dem Pumpenaustritt (9.1) verbundenen Leitung (23) eine Drossel, insbesondere eine Durchflussblende (22), vorgesehen ist, bei der bei einem Durchfluss der Druck (P_{B}) der Hydraulikflüssigkeit hinter der Drossel, insbesondere Durchflussblende (20), geringer ist als der Druck (P_{H}) der Hydraulikflüssigkeit vor der Drossel, insbesondere Durchflussblende (20), und dass das Notlauf-Kupplungsventil (8) mit dem Differenzdruck zwischen dem Druck (P_{H}) vor der Drossel, insbesondere der Durchflußblende (20), und dem Druck (P_{B}) hinter der Drossel, insbesondere der Durchflussblende (20), ansteuerbar ist.

8. Ansteuereinrichtung nach einem der vorangegangenen Ansprüche, **dadurch gekennzeichnet, dass** das elektrisch ansteuerbare Steuerventil (11) und (24) bei fehlender elektrischer Ansteuerung in einen definierten Zustand verbringbar ist.

9. Ansteuereinrichtung nach einem der vorangegangenen Ansprüche, **dadurch gekennzeichnet, dass** das hydraulisch ansteuerbare Notlauf-Kupplungsventil (8) bei vorhandener elektrischer Ansteuerung des Steuerventils (11) und (24) in einen definierten Zustand verbringbar ist.
